# EUROPEAN PATENT APPLICATION

(11) **EP 4 825 657 A1**
(43) Date of publication of application: **21.10.2026**
(21) Application number: 24902731.9
(22) Date of filing: 06.12.2024
(51) Int. Cl.: B60N 2/879

(54) **SEAT AND TRANSPORTATION MEANS**

(30) Priority: 15.12.2023 CN 202311735291
(71) Applicant: Yinwang Intelligent Technologies Co., Ltd., Shenzhen, Guangdong 518110 (CN)
(72) Inventor: ZHANG, Pengju, Shenzhen, Guangdong 518129 (CN); ZHONG, Xu, Shenzhen, Guangdong 518129 (CN); QIU, Xiaojun, Shenzhen, Guangdong 518129 (CN); WU, Sheng, Shenzhen, Guangdong 518129 (CN)
(74) Representative: Henselmann, Alexander Gerhard
(86) International application number: PCT/CN2024/137437
(87) International publication number: WO 2025/124310

(57) **Abstract**

This application relates to the field of noise control technologies, and provides a seat and a transportation means, to provide stable noise cancellation experience for users. The seat includes a seat body and a headrest. The headrest is fastened to the seat body, a microphone is disposed in the headrest, the seat body includes a backrest, and a speaker is disposed in the backrest. In a first mode, the microphone is configured to collect noise, and the speaker is configured to play inverse phase noise of the noise. Disposing the microphone in the headrest that is closer to an ear of a user enables the microphone to collect noise similar to noise heard by the ear of the user, thereby achieving better noise cancellation performance at the ear of the user and providing more serene riding experience for the user. In addition, disposing the speaker in the backrest that is farther away from the ear of the user prevents a large change of the inverse phase noise played by the speaker and heard by the ear of the user despite a slight movement of the head of the user, thereby providing more stable noise cancellation experience for the user.

## Description

### CROSS-REFERENCE TO RELATED APPLICATIONSA

This application claims priority to Chinese Patent Application No. 202311735291.4, filed with the China National Intellectual Property Administration on December 15, 2023 and entitled "SEAT AND TRANSPORTATION MEANS", which is incorporated herein by reference in its entirety.

### TECHNICAL FIELD

This application relates to the field of noise control technologies, and in particular, to a seat and a transportation means.

### BACKGROUND

During traveling of a vehicle, factors such as air friction with a vehicle body, tire friction with the ground, and engine noise may generate significant in-vehicle low-frequency noise, which directly affects comfort and well-being of passengers. To effectively suppress such in-vehicle low-frequency noise, may studies have focused on an active noise cancellation (active noise cancellation, ANC) technology for addressing in-vehicle noise. A basic principle of the ANC technology is to cancel external noise by generating inverse phase noise equal to the external noise, thereby implementing noise cancellation. The ANC technology has good effect on controlling the low-frequency noise and is expected to become one of the main solutions for in-vehicle noise control in the future.

Currently, the ANC technology is usually combined with an in-vehicle seat to form a noise cancellation seat. However, noise cancellation effect of existing mainstream noise cancellation seats is poor. A slight movement of a passenger's head may cause a very noticeable difference in noise cancellation performance, and stable noise cancellation experience cannot be provided for the passenger. As a result, improvement in the passenger's riding comfort is limited.

In conclusion, how to provide stable noise cancellation experience for passengers is currently an urgent technical problem to be resolved in the field of in-vehicle noise control.

### SUMMARY

This application provides a seat and a transportation means, to provide stable noise cancellation experience for passengers.

According to a first aspect, this application provides a seat. The seat includes a seat body and a headrest. The headrest is fastened to the seat body, a microphone is disposed in the headrest, the seat body includes a backrest, and a speaker is disposed in the backrest. In a first mode, the microphone is configured to collect noise, and the speaker is configured to play inverse phase noise of the noise.

In the solution, the headrest is closer to the head of a user than the backrest. Therefore, the microphone is disposed in the headrest, and the speaker is disposed in the backrest, so that a distance between the microphone and the head of the user is shorter, and a distance between the speaker and the head of the user is longer. In this way, the shorter distance between the microphone and an ear of the user makes the noise collected by the microphone similar to noise heard by the ear of the user, and good cancellation effect of the inverse phase noise corresponding to the noise on the noise heard by the ear of the user, thereby achieving better noise cancellation performance at the ear of the user, and providing quieter riding experience for the user. In addition, the longer distance between the speaker and the ear of the user prevents, based on a characteristic that sound intensity of a speaker sound field decreases accordingly with an increase of a distance, a large change of sound played by the speaker and heard by the ear of the user despite a slight movement of the head of the user, thereby helping provide stable noise cancellation experience for the user. It can be seen that this solution can achieve both good noise cancellation effect and stable noise cancellation experience, to effectively improve riding comfort of the user.

Optionally, the first mode is a mode with a higher noise cancellation requirement, for example, a rest mode or an immersive sound playing mode. Active noise cancellation in the first mode can provide a quieter environment for the user to rest, sleep, watch video, or the like, thereby satisfying a noise cancellation requirement of the user.

Optionally, in a second mode, the microphone does not operate, or the microphone operates while the speaker plays inverse phase noise for noise cancellation at a noise cancellation level lower than a noise cancellation level corresponding to the first mode. The second mode may be understood as a mode with a lower noise cancellation requirement, for example, any mode other than the rest mode and the immersive sound playing mode.

Further, optionally, in the second mode, neither the microphone nor the speaker operates. In this case, noise cancellation is not performed in the second mode, and the speaker is only used to implement an active noise cancellation function in the first mode. Alternatively, in the second mode, the microphone does not operate, and the speaker operates, but content played by the speaker is different from content played in the first mode. In this case, noise cancellation is not performed in the second mode, and the speaker may be further configured to implement another function in addition to implementing the active noise cancellation function in the first mode, for example, may be further configured to play road reminder information. Alternatively, in the second mode, both the microphone and the speaker operate, and the speaker plays the inverse phase noise for noise cancellation at the noise cancellation level lower than the noise cancellation level in the first mode. For example, an upper frequency limit of the inverse phase noise played by the speaker in the second mode is lower than an upper frequency limit of the inverse phase noise played by the speaker in the first mode. In this case, noise cancellation is also performed in the second mode with poorer noise cancellation effect than that in the first mode. Therefore, the user can also have specific noise cancellation experience in the second mode.

In a possible design, when the backrest covers, in height, an area in which the headrest is located, the headrest may be suspended in front of the backrest, and the speaker is disposed in an area that is on the backrest and that overlaps the headrest, for example, may be disposed on the uncovered backrest behind the headrest. A distance between this position and the ear of the user remains more than 10 cm, so that the ear of the user is less affected by inhomogeneity of a secondary sound field of the speaker.

In a possible design, when the backrest does not cover, in height, an area in which the headrest is located, the headrest may be connected to an upper part of the backrest through a connecting rod, and the speaker is disposed in an area that is on the backrest and that is opposite to the headrest, for example, may be disposed on a top surface of the backrest below the headrest. A distance between this position and the ear of the user can still maintain more than 10 cm, so that the ear of the user is less affected by inhomogeneity of a secondary sound field of the speaker.

In a possible design, to improve structural aesthetics of the backrest, a diaphragm surface of the speaker may face the head of the user. For example, when the speaker is disposed on the uncovered backrest behind the headrest, the diaphragm surface of the speaker may face forward. For another example, when the speaker is disposed on the top surface of the backrest below the headrest, the diaphragm surface of the speaker may face upward.

In a possible design, the headrest includes a headrest body and a pivotable portion pivotably disposed on two sides of the headrest body, the headrest body is fastened to the backrest, and the microphone is disposed in the pivotable portion. In the first mode, the pivotable portion is at a position close to a human ear. In this way, when the first mode is entered, the pivotable portion may pivot to drive the microphone disposed in the pivotable portion to move in a direction close to the ear of the user, to reduce the distance between the microphone and the ear of the user, and improve noise cancellation effect at the ear of the user in the first mode.

In a further possible design, in the second mode, the pivotable portion is at a position away from the human ear. In this way, when the second mode is entered, the pivotable portion may pivot to move in a direction away from the ear of the user, to provide larger head movement space for the user in the second mode.

In an example of the design, the pivotable portion is connected to the headrest body through a rotating mechanism, a driver is disposed in the headrest body, and the driver is connected to the rotating mechanism; and the driver is configured to: when it is determined to switch from the second mode to the first mode, drive the rotating mechanism to drive the pivotable portion to pivot to the position close to the human ear; and when it is determined to switch from the first mode to the second mode, drive the rotating mechanism to drive the pivotable portion to pivot to the position away from the human ear. In this way, the driver may drive the rotating mechanism to rotate, so as to drive the pivotable portion to pivot, so that the microphone moves in a direction away from or close to the ear of the user, thereby flexibly controlling a distance between the microphone and the ear of the user in the first mode or the second mode.

In a further possible example, the driver is connected to a controller. The controller is configured to: when it is determined that the head of the user stably rests on the headrest body and a current mode is the second mode, send first indication information to the driver, and when it is determined that the head of the user does not stably rest on the headrest body and a current mode is the first mode, send second indication information to the driver. The driver is configured to: determine, based on the first indication information, to switch from the second mode to the first mode, and determine, based on the second indication information, to switch from the first mode to the second mode.

According to the example, when determining that the user is resting, sleeping, or in another scenario in which the head stably rests on the headrest, the controller may control, through the driver, the rotating mechanism to drive the pivotable portion to pivot, so that the microphone is close to the ear of the user, to improve accuracy of noise collection by the microphone and provide a quieter environment for the user. On the contrary, when it is determined that the user is not resting, not sleeping, or in another scenario in which the head does not stably rest on the headrest, the driver may control the rotating mechanism to drive the pivotable portion to pivot, so that the pivotable portion is away from the ear of the user, to provide larger head movement space for the user and facilitate head movement of the user.

In a further possible example, whether the head of the user stably rests on the headrest body may be determined in the following manner 1 or manner 2:
Manner 1: A pressure detection unit is disposed in the headrest body, or a pressure detection unit is disposed in both the headrest body and the backrest, and the pressure detection unit is connected to the controller. The pressure detection unit is configured to detect pressure on the headrest body or pressure on the headrest body and the backrest, and send the pressure to the controller. The controller is configured to: when it is determined that the pressure remains greater than a pressure threshold in specified duration, determine that the head of the user stably rests on the headrest body; and when it is determined that the pressure does not maintain greater than the pressure threshold in specified duration, determine that the head of the user does not stably rest on the headrest body.

In the manner 1, the controller may determine, by analyzing a pressure change of the head of the user on the headrest body in a period of time, and optionally a pressure change of the back of the user on the backrest, whether the head of the user stably rests on the headrest body. The pressure detection unit usually collects the pressure at high frequency in real time. Therefore, in this manner, a posture change of the head of the user relative to the headrest body can be determined in time. In addition, determining whether the user stably rests on the headrest body based on the pressure of the head and the pressure of the back can further avoid misjudgment caused by analyzing only the pressure of the head, and help improve detection accuracy.

Manner 2: A camera module is disposed in front of the seat, and the camera module is connected to the controller. The camera module is configured to: capture an image of the seat, and send the image to the controller. The controller is configured to: determine a distance between the head of the user and the headrest body of the seat based on the image, when the distance remains greater than a distance threshold in specified duration, determine that the head of the user stably rests on the headrest body, and when the distance does not maintain greater than the distance threshold in specified duration, determine that the head of the user does not stably rest on the headrest body.

In the manner 2, the controller may determine, by analyzing a change of the distance between the head of the user and the headrest body in a period of time, whether the head of the user stably rests on the headrest body. In this way, distance detection is more intuitive than pressure detection, and can achieve higher detection accuracy.

In a further possible example, before sending the first indication information or the second indication information to the driver, the controller may further send prompt information to the user, where the prompt information prompts the user whether to enable the first mode or the second mode. In this way, when the current state satisfies a switching condition of the rest mode or a non-rest mode, the user is prompted to indicate whether to switch the mode, to meet personal requirements of different users.

In a further possible example, after sending the first indication information to the driver, the controller may further turn on the microphone and the speaker, so that the microphone and the speaker operate, thereby starting active noise cancellation.

In a further possible example, after sending the second indication information to the driver, the controller may further turn off the microphone to disable active noise cancellation, or may not turn off the microphone, and reduce a noise cancellation level at which the speaker plays inverse phase noise for noise cancellation. For example, a frequency upper limit of playing the inverse phase noise may be reduced, to reduce the noise cancellation level at which the speaker plays the inverse phase noise for noise cancellation, thereby expanding a noise cancellation area range, so that even if the head of the user moves to a position farther away from the speaker in the non-rest mode, the user can still hear the inverse phase noise played by the speaker.

According to a second aspect, this application provides a transportation means, including a controller and the seat according to any one of the first aspect or the designs of the first aspect, where the controller is configured to: when it is detected that the head of a user stably rests on the headrest, control the seat to be in the first mode. Optionally, the controller is further configured to: when it is detected that the head of a user does not stably rest on the headrest, control the seat to be in a second mode. For related content of controlling, by the controller, the seat to implement mode switching, refer to the first aspect. Details are not described herein again.

Implementations and beneficial effect of the first aspect and the second aspect are specifically described in the description of embodiments.

### BRIEF DESCRIPTION OF DRAWINGS

FIG. 1 is a curve diagram of an example of an association relationship between sound intensity and a propagation distance;
FIG. 2 is a diagram of an example of a possible application scenario according to this application;
FIG. 3A to FIG. 3C are a diagram of an example structure of a seat according to this application;
FIG. 4 is a diagram of an example structure of a seat frame according to this application;
FIG. 5A to FIG. 5C are a diagram of an example structure of another seat according to this application;
FIG. 6A and FIG. 6B are a diagram of an example structure of a headrest according to this application;
FIG. 7 is a diagram of an example assembly structure of a headrest and a backrest according to this application;
FIG. 8 is a diagram of an example architecture of a control circuit according to this application;
FIG. 9 is an example schematic interaction flowchart of a control method according to this application;
FIG. 10a(A) to FIG. 10a(C) are a diagram of an example structure of another seat according to this application; and
FIG. 10b is a diagram of an example of a device using a seat according to this application.

Reference numerals:
100: seat; 101: seat body; 1011: backrest; 1012: rotating shaft; 1013: cushion; 1014: seat pan frame;
200: support member; 102: headrest; 1021: headrest body; 1022: pivotable portion; 1022a: first pivotable portion; 1022b: second pivotable portion;
1023: rotating mechanism; 1023a: first rotating mechanism; 1023b: second rotating mechanism; 103: speaker; 103a: first speaker;
103b: second speaker; 104: microphone; 104a: microphone group 1; 104b: microphone group 2; 105: pressure detection unit;
105a: first pressure detection unit; 105b: second pressure detection unit; 106: connecting rod; 107: driver; and 300: controller.

### DESCRIPTION OF EMBODIMENTS

The following describes in detail embodiments of this application with reference to accompanying drawings.

The following describes some terms in this application. It should be noted that, the explanations are for ease of understanding by a person skilled in the art, and are not intended to limit the protection scope claimed by this application.

### 1. ANC technology

Generally, an implementation element of the ANC technology may include a microphone, a controller, and a speaker. The microphone is configured to collect ambient noise at a target point and send the ambient noise to the controller. The controller is configured to generate inverse phase noise that is 180 degrees out of phase with the ambient noise and send the inverse phase noise to the speaker. The speaker is configured to play the inverse phase noise. The inverse phase noise and the ambient noise at the target point have a same spectrum and exactly opposite phases. Therefore, superimposing the inverse phase noise on the ambient noise at the target point can effectively suppress and cancel the ambient noise.

### 2. Primary sound field and secondary sound field

In a scenario of using the ANC technology for noise cancellation, the primary sound field may be understood as original noise sound at the target point when the speaker is not producing sound, and the secondary sound field may be understood as sound generated at the target point by the inverse phase noise emitted by the speaker. A sound field obtained by superimposing the primary sound field and the secondary sound field is real sound at the target point. Real sound closer to zero indicates better noise cancellation effect on the ambient noise.

### 3. Inhomogeneity of the sound field

Both the primary sound field and the secondary sound field may not be homogeneous, which is mainly caused by energy attenuation during sound propagation. In other words, during sound propagation, sound intensity attenuates accordingly with an increase of a propagation distance. For example, an association relationship between sound intensity and a propagation distance of a point sound source is shown in the following formula (1.1): $I = \frac{P}{4 {πr}^{2}}$ (1.1)

I is sound intensity at a specific sound receiver point in the sound field, P is power of sound emitted by the sound source, and r is a distance between the sound receiver point and the sound source, that is, a propagation distance.

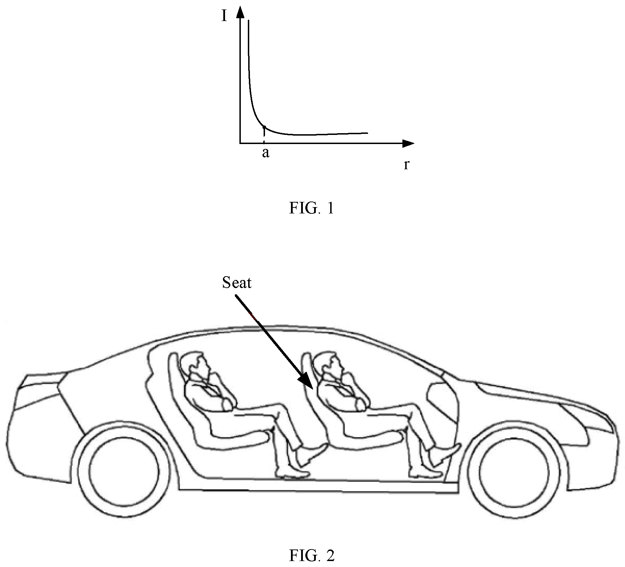

Based on the formula (1.1), FIG. 1 shows a curve of an association relationship between sound intensity and a propagation distance. It can be seen that, within a small distance range near a sound source, the sound intensity I quickly decreases accordingly with an increase of the distance r between a sound receiver point and a sound source (referred to as a rapid attenuation stage). When the propagation distance r reaches a specific value (referred to as a transition point, for example, a state point a shown in the figure), the sound intensity I tends to be constant as the propagation distance continues to increase (referred to as a stable stage).

The foregoing describes some terms in this application, and the following describes a possible application scenario of this application.

In a possible implementation, a seat in this application may be integrated into a vehicle. The vehicle may be, for example, a car, a truck, a bus, a train, a recreational vehicle, a travel vehicle, a van, a playground vehicle, a construction vehicle, a tram, a golf cart, a sightseeing vehicle, a patrol vehicle, an intelligent vehicle, or a digital vehicle. FIG. 2 is a diagram of an example of a possible application scenario according to this application. In this application scenario, for example, a transportation means is a car, and one or more seats of the car may be disposed as a seat in this application. The seat in this application may play inverse phase noise of in-vehicle ambient noise for a user, to provide a quiet environment for the user who sits in the seat, and may be used to alleviate discomfort caused by the in-vehicle noise when the user is resting or sleeping, or may be used to play immersive sound. For example, this can improve playing effect of watching audio and video by the user, and improve viewing experience of the user. When the seat in this application is disposed as a driver seat, the seat can further improve, by playing the inverse phase noise for a driver, quality of voice information such as a navigation reminder or a driving reminder heard by the driver, to implement safe driving and efficient driving.

It should be understood that the application scenario is merely an example, and the seat provided in this application may be further applied to another possible scenario, and is not limited to the scenario shown in the foregoing example. For example, the seat may alternatively be integrated into another transportation means, for example, a subway, a high-speed train, a ship, a ferry, a passenger ship, an airplane, or a helicopter, to reduce external low-frequency noise, and provide a quiet environment for a user, so that the user can ride more comfortably. For another example, the seat may alternatively be applied to a smart home scenario, especially a home environment near a subway station, a railway station, an airport, or a construction site, and is used as an auxiliary means for home noise cancellation, thereby improving smart home experience of users. For another example, the seat may alternatively be applied to an office scenario, to reduce impact of sound such as typing or speaking of a user at another workstation on a user at a current workstation, and improve concentration of the user during office work. For another example, the seat may alternatively be applied to a public area, for example, a cinema, a shopping mall, a high-speed railway station, an airport, a bus station, a hospital, a school, a park, a community, a square, or a church, to isolate external noise and reduce ambient noise around a user, thereby making the user more relaxed and comfortable. Other examples are not described herein.

It should be noted that the application scenarios described in this application are intended to describe the technical solutions in this application more clearly, and do not constitute a limitation on the technical solutions provided in this application.

As described in the background, noise cancellation effect of conventional noise cancellation seats is poor, which is mainly caused by improper positions of microphones or speakers of the conventional noise cancellation seats. For example, in some existing solutions, both a microphone and a speaker are placed in a backrest of a seat. However, the microphone is easily blocked by a body of a user in the backrest of the seat, resulting in a decrease in noise intensity collected by the microphone or even a failure to collect noise. In addition, the backrest of the seat is far away from the ear of the user, resulting in a great difference between noise collected by the microphone and noise actually heard by the ear of the user. Both of these factors reduce accuracy of the noise collected by the microphone, making it difficult to ensure noise cancellation effect at the ear of the user. For example, it is found in an experiment that when the microphone is 10 cm or farther away from the ear of the user, noise cancellation effect of the noise cancellation seat is attenuated by at least 50%, and in some scenarios, even attenuated by up to 80%. Therefore, to improve the noise cancellation effect at the ear of the user, the microphone needs to be disposed at a position closer to the ear of the user. Based on this, in some other existing solutions, both a microphone and a speaker are disposed in a headrest of a seat. Although this solution can ensure that the microphone is closer to an ear of a user, the speaker is also closer to the ear of the user. As a result, a distance between the ear of the user and the speaker falls within a distance range corresponding to a rapid attenuation stage of the speaker. According to the content in the explanation of the terms, within this distance range, if the user moves slightly, sound heard by the ear of the user from the speaker changes greatly. As a result, superimposed sound heard by the ear of the user is very unstable, and it is difficult to provide stable noise cancellation experience for the ear of the user. It can be seen that the existing noise cancellation seats cannot provide stable noise cancellation experience for users while ensuring noise cancellation effect.

In view of this, this application provides a seat. The seat is provided with a microphone in a headrest, and a speaker is disposed in a backrest. In this way, a distance between the microphone and an ear of a user is shorter, to ensure similarity between noise collected by the microphone and noise heard by the ear of the user, and ensure noise cancellation effect at the ear of the user. In addition, a distance between the speaker and the ear of the user is longer, so that the distance between the ear of the user and the speaker can be shortened or within a distance range corresponding to the stable stage of the speaker, and a large change of sound played by the speaker and heard by the ear of the user can be prevented despite a slight movement of the ear of the user, thereby helping provide stable noise cancellation experience for the user.

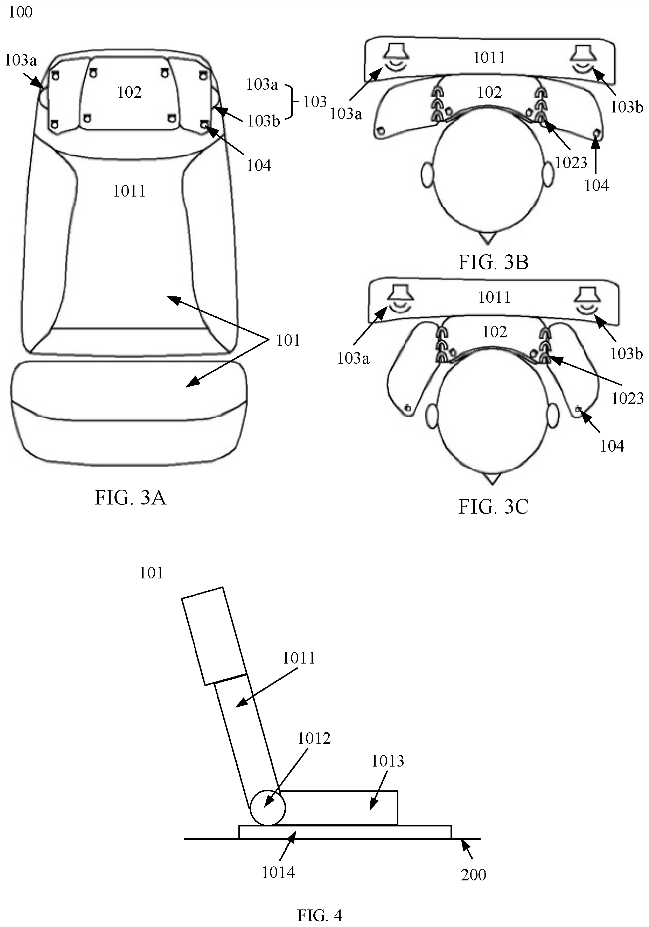

Based on the content, the following describes in detail the solutions provided in embodiments of this application with reference to FIG. 3A to FIG. 10b.

In embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

In this application, a "distance" does not mean an absolute distance, and may have a specific engineering error. "Duration" does not indicate absolute duration, and may have a specific engineering error. "Direction" does not indicate an absolute direction, and may have a specific engineering error.

FIG. 3A to FIG. 3C are a diagram of a structure of a seat according to this application. FIG. 3A is a main view of the seat, FIG. 3B is a diagram of a second mode of the seat, and FIG. 3C is a diagram of a first mode of the seat. As shown in FIG. 3A to FIG. 3C, the seat 100 includes a seat body 101 and a headrest 102. The headrest 102 is fastened to the seat body 101, a microphone 104 is disposed in the headrest 102, the seat body 101 includes a backrest 1011, and a speaker 103 is disposed in the backrest 1011. In the first mode, the microphone 104 is configured to collect noise, and the speaker 103 is configured to play inverse phase noise of the noise. Optionally, in the second mode, the microphone 104 does not operate, or the microphone 104 operates, and a frequency and intensity of an output signal of the speaker 103 are different from those in the first mode. For example, the frequency and intensity of the output signal may be lower than those in the first mode, so that a noise cancellation level in the second mode is lower than that in the first mode. The first mode may be understood as a mode with a higher noise cancellation requirement, for example, a rest mode or an immersive sound playing mode. The second mode may be understood as a mode with a lower noise cancellation requirement, for example, any mode other than the first mode, such as a non-rest mode. The first mode and the second mode may also have other names. For example, in some scenarios, the first mode is also referred to as a noise cancellation mode, and the second mode is also referred to as a common mode.

Optionally, the microphone 104 and the speaker 103 may be connected to a controller (not shown in the figure). The controller is configured to: when it is determined to switch from the second mode to the first mode, control the speaker 103 and the microphone 104 to be turned on. After being turned on, the microphone 104 periodically collects noise at a position (that is, the headrest) of the microphone 104. The controller obtains the noise, generates corresponding inverse phase noise, and then sends the inverse phase noise to the speaker 103. The speaker 103 plays the inverse phase noise in an on state. In this way, active noise cancellation in the first mode is implemented.

The following separately describes components in FIG. 3A to FIG. 3C, to provide an example of a specific implementation solution.

### 1. Seat body

Optionally, the seat body 101 may include a seat frame and a skin. The skin is wrapped outside the seat frame to form an appearance surface of the seat body 101. As a support component of the seat body 101, the seat frame needs to have sufficient structural strength and specific rigidity, and may be usually made of steel, aluminum, magnesium, a composite material, or the like. The skin is also referred to as a surface or a surface cover, and is in direct contact with a user. The skin may be made of a soft material, for example, leather, artificial leather, fabric, or natural fiber.

Further, optionally, FIG. 4 is a diagram of a structure of a seat frame according to this application. In this example, the seat frame may include a backrest 1011, a rotating shaft 1012, and a cushion 1013, and the backrest 1011 is rotatably connected to the cushion 1013 through the rotating shaft 1012. When a user sits in the seat body 101, the user may adjust a tilt angle between the backrest 1011 and the cushion 1013 by rotating the backrest 1011, to find a seat state suitable for a current posture. For example, when the user needs to rest, the backrest 1011 may be rotated to a position with a larger tilt angle, so that the user can rest on the backrest 1011 more closely, to improve rest comfort. When viewing scenery, the backrest 1011 may be rotated to a position with a smaller tilt angle, to view a broader panorama.

Further, optionally, refer to FIG. 4. The seat frame may further include a seat pan frame 1014, the cushion 1013 is fastened to the seat pan frame 1014, and the seat pan frame 1014 is disposed above a support plate 200 and is slidably connected to the support plate 200. The support plate 200 may be understood as a bottom plate of space in which the seat 100 is located, for example, a vehicle interior floor. The seat pan frame 1014 may be slidably connected to the support plate 200 in a plurality of manners. For example, a slideway is disposed on the support plate 200 (or the seat pan frame 1014), or a guide rail is disposed on the seat pan frame 1014 (or the support plate 200). The guide rail is embedded in the slideway, so that the seat pan frame 1014 can slide relative to the support plate 200. In this structural design, when a user sits in the seat body 101, the user may further drive the seat pan frame 1014 to slide relative to the support plate 200, to find a seat position suitable for a body shape of the user. For example, a heavier user may drive the seat pan frame 1014 to move to a more rearward position, while a lighter user may drive the seat pan frame 1014 to move to a more forward position, so that there is space in front of the user that is suitable for the body shape of the user, thereby improving riding comfort of the user.

The foregoing content describes a possible structure of the seat body 101. The following describes a manner of connecting the seat body 101 to the headrest 102.

Optionally, that the headrest 102 is fastened to the seat body 101 may be understood as that the headrest 102 is fastened to the backrest 1011 in the seat body 101. After the user rests on the backrest 1011, the head of the user may be located in front of the headrest 102. The headrest 102 is fastened to the backrest 1011 in different manners depending on different heights of the backrest 1011. For example:

In an example (referred to as an example A for short), as shown in FIG. 3A to FIG. 3C, when the backrest 1011 covers, in height, an area in which the headrest 102 is located, the headrest 102 may be suspended in front of the backrest 1011, and may be fastened to the backrest 1011 or an external skin through pasting or another connection structure. In this way, the backrest 1011 behind the headrest 102 may be used a component to bear the headrest 102, to share pressure of the head of the user on the headrest 102, and relieve the pressure on the headrest 102.

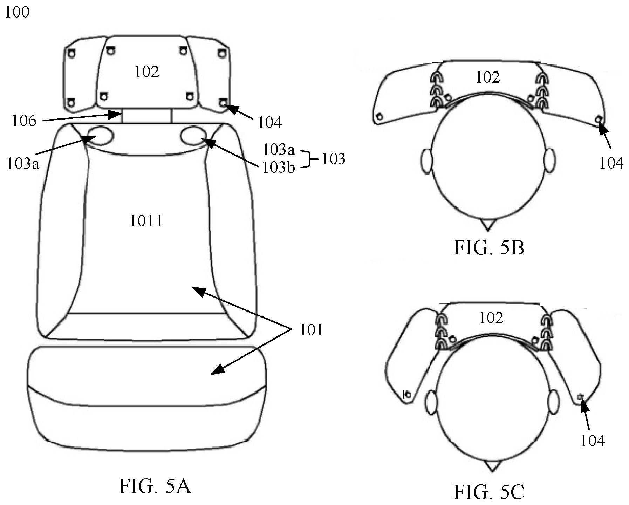

In another example (referred to as an example B for short), FIG. 5A to FIG. 5C are a diagram of a structure of another seat according to this application. As shown in FIG. 5A, when the backrest 1011 does not cover, in height, an area in which the headrest 102 is located, the seat 100 may further include a connecting rod 106, and the headrest 102 is connected to an upper part of the backrest 1011 through the connecting rod 106. In this way, the headrest 102 directly bears the pressure of the head of the user resting on the headrest 102, and the connecting rod 106 provides support force for fastening the headrest 102 at the current position. Compared with in the example A, in the example B, the backrest 1011 may be shorter, and a combination form of the backrest 1011 and the headrest 102 is more flexible and beautiful, and looks lightweight.

Further, optionally, that the speaker 103 is disposed in the backrest 1011 may be understood as that the speaker 103 is disposed in the backrest 1011 within a range near the head of the user. There may be one or more speakers 103. A distance between each speaker 103 and an ear of the user closest to the speaker 103 may fall within a first distance range. The first distance range may be understood as a range in which the inverse phase noise played by the speaker 103 can be well heard and the heard inverse phase noise changes slightly when the head of the user moves slightly. The first distance range may be determined by a person skilled in the art based on experience, or may be obtained based on an experimental test. For example, in an example, it is found through experimental testing that when the distance between the speaker 103 and the ear of the user is within a range of [10 cm, 30 cm], the ear of the user can hear inverse phase noise with appropriate sound intensity, without a great change of the inverse phase noise due to slight movement. Therefore, the first distance range may be set to [10 cm, 30 cm], and this range is within a stable stage of the sound field of the inverse phase noise played by the speaker 103, so that the ear of the user can hear stable inverse phase noise, thereby providing stable noise cancellation effect for the ear of the user.

Further, optionally, the speaker 103 may be disposed at a specific position based on a distance between the user sitting in the seat 100 and each point on the backrest 1011. For example, when the headrest 102 is suspended in front of the backrest 1011 in the manner shown in FIG. 3A to FIG. 3C, the speaker 103 may be disposed in an area that is on the backrest 1011 and that overlaps the headrest 102 and is not covered by the headrest 102. In FIG. 3A to FIG. 3C, two speakers (that is, a first speaker 103a and a second speaker 103b) are used as an example. The first speaker 103a and the second speaker 103b are disposed on two opposite sides of the backrest 1011 behind the headrest 102. A distance between the first speaker 103a and a right ear of the user is within a first distance range, and a distance between the second speaker 103b and a left ear of the user is within the first distance range. For another example, when the headrest 102 is disposed above the backrest 1011 in the manner shown in FIG. 5A to FIG. 5C, the speaker 103 may be disposed in an area that is on the backrest 1011 and that is opposite to the headrest 102. In FIG. 5A to FIG. 5C, two speakers (that is, a first speaker 103a and a second speaker 103b) are also used as an example. The first speaker 103a and the second speaker 103b are disposed on left and right sides that are opposite to each other on a top surface of the backrest 1011, and both a distance between the first speaker 103a and a right ear of the user and a distance between the second speaker 103b and a left ear of the user fall within a first distance range.

Further, optionally, to improve structural aesthetics of the backrest 1011, a diaphragm surface of the speaker 103 may further face the head of the user. For example, refer to FIG. 3A to FIG. 3C. When the speaker 103 is disposed in the backrest 1011 behind the headrest 102, the head of the user is located in front of the headrest 102. In this case, the diaphragm surface of the speaker 103 may face forward. Alternatively, refer to FIG. 5A to FIG. 5C. When the speaker 103 is disposed on the top surface of the backrest 1011, the head of the user is located above the backrest 1011. In this case, the diaphragm surface of the speaker 103 may face upward. However, it should be understood that this is only a possible design. A specific direction faced by the diaphragm surface of the speaker 103 may be determined based on a designer's habit, an actual application scenario, or the like. This is not specifically limited in this application.

### 2. Headrest

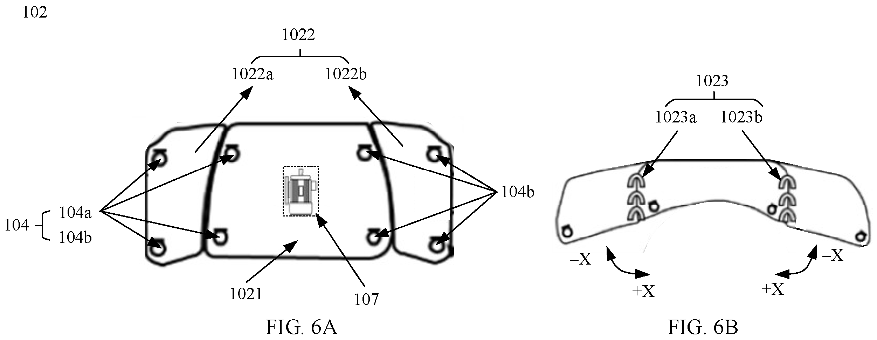

FIG. 6A and FIG. 6B are a diagram of a structure of a headrest according to this application. FIG. 6A is a main view of the headrest, and FIG. 6B is a top view of the headrest. As shown in FIG. 6A and FIG. 6B, the headrest 102 may include a headrest body 1021 and a pivotable portion 1022 pivotably disposed on two sides of the headrest body 1021, for example, a first pivotable portion 1022a disposed on a right side and a second pivotable portion 1022b disposed on a left side. The first pivotable portion 1022a and the second pivotable portion 1022b are separately pivotably connected (also referred to as in transmission connection) to the headrest body 1021, and may pivot close to each other around the headrest body 1021 along a +X direction shown in the figure, or pivot away from each other along a -X direction shown in the figure. A microphone 104 may be disposed in each of the first pivotable portion 1022a and the second pivotable portion 1022b. In a process of switching from the second mode to the first mode, the first pivotable portion 1022a and the second pivotable portion 1022b pivot close to each other along the +X direction shown in the figure, and stop at positions close to the ears of the user, as shown in FIG. 3C or in FIG. 5C. In this case, the microphones 104 disposed in the first pivotable portion 1022a and the second pivotable portion 1022b are also close to the ears of the user. Therefore, a small difference exists between primary sound field noise received by the microphones 104 and primary sound field noise received by the ears of the user. If the speaker 103 is already playing inverse phase noise, a small difference further exists between secondary sound field noise received by the microphones 104 and secondary sound field noise received by the ears of the user, noise collected by the microphones 104 is similar to noise heard by the ears of the user, and active noise cancellation is performed by using the noise, to be effectively adapted to a noise cancellation requirement of the user in the first mode. On the contrary, in a process of switching from the first mode to the second mode, the first pivotable portion 1022a and the second pivotable portion 1022b pivot away from each other along the -X direction shown in the figure, and stop at positions away from the ears of the user, as shown in FIG. 3B or in FIG. 5B. In this case, the first pivotable portion 1022a and the second pivotable portion 1022b are unfolded, so that the user can have larger head movement space, to be effectively adapted to a head movement requirement of the user in the second mode.

Optionally, that the headrest 102 is fastened to the seat body 101 may indicate that the headrest body 1021 is fastened to the backrest 1011. The headrest body 1021 includes a skin and a filler. The filler is filled in the skin to support the skin. The filler may be, for example, a soft material like a sponge. When the headrest 102 is suspended in front of the backrest 1011 in the manner shown in FIG. 3A to FIG. 3C, the headrest body 1021 may be fastened to the backrest 1011 in a manner like pasting. For example, the skin of the headrest body 1021 is pasted on the backrest 1011. When the headrest 102 is connected above the backrest 1011 in the manner shown in FIG. 5A to FIG. 5C, the headrest body 1021 may be connected to the backrest 1011 through the connecting rod 106. For example, one end of the connecting rod 106 is disposed in the skin of the headrest body 1021, and the other end is connected to the backrest 1011. In this way, when the pivotable portion 1022 pivots close to or away from the headrest body 1021, the pivotable portion 1022 pivots in a direction away from or close to the backrest 1011, so that a distance between the microphone 104 disposed in the pivotable portion 1022 and the speaker 103 disposed in the backrest 1011 increases or decreases.

Optionally, refer to FIG. 6A and FIG. 6B. The headrest 102 may further include a rotating mechanism 1023, and the pivotable portion 1022 is pivotably connected to the headrest body 1021 through the rotating mechanism 1023. The rotating mechanism 1023 may be, for example, a rotating shaft, a hinge, a gear, a universal joint, or another mechanism through which two components can rotate relative to each other. The rotating mechanism 1023 may specifically include a first rotating mechanism 1023a and a second rotating mechanism 1023b. The first pivotable portion 1022a is pivotably connected to the headrest body 1021 through the first rotating mechanism 1023a, and the second pivotable portion 1022b is pivotably connected to the headrest body 1021 through the second rotating mechanism 1023b. In some scenarios, to ensure synchronization of pivoting of the first pivotable portion 1022a and the second pivotable portion 1022b, the first rotating mechanism 1023a and the second rotating mechanism 1023b may be further connected to each other through a synchronization component (not shown in the figure). The synchronization component may include, for example, two gears. The two gears are engaged with each other, one gear is connected to the first rotating mechanism 1023a, and the other gear is connected to the second rotating mechanism 1023b. Through relative transmission of the two gears, the two rotating mechanisms may rotate in opposite directions but at a same rotation angle.

Further, optionally, the headrest 102 may further include a driver 107. The driver 107 may be, for example, a motor. The driver 107 is connected to the rotating mechanism 1023 and is configured to drive the rotating mechanism 1023 to drive the pivotable portion 1022 to pivot. For example, during switching from the second mode to the first mode, the driver 107 may drive the first rotating mechanism 1023a to drive the first pivotable portion 1022a to pivot, and drive the second rotating mechanism 1023b to drive the second pivotable portion 1022b to pivot, so that the first pivotable portion 1022a and the second pivotable portion 1022b pivot close to each other to positions shown in FIG. 3C or in FIG. 5C. In addition, during switching from the first mode to the second mode, the driver 107 may drive the first rotating mechanism 1023a to drive the first pivotable portion 1022a to pivot, and drive the second rotating mechanism 1023b to drive the second pivotable portion 1022b to pivot, so that the first pivotable portion 1022a and the second pivotable portion 1022b pivot away from each other to positions shown in FIG. 3B or in FIG. 5B.

The driver 107 may be disposed at any position of the headrest 102. For example, in FIG. 6A and FIG. 6B, an example in which the driver 107 is disposed in the headrest body 1021 is used. In this way, the driver 107 may be directly connected to the rotating mechanisms 1023 on both sides through a cable in the headrest body 1021, without passing through a movable portion between the pivotable portion 1022 and the headrest body 1021, thereby avoiding damage caused by frequent bending of the cable. It should be understood that, in another possible disposition manner, the driver 107 may alternatively be disposed in the pivotable portion 1022 on one side, or disposed in the pivotable portions 1022 on both sides and respectively connected to corresponding rotating mechanisms 1023, or disposed in the backrest 1011, or the like. This is not specifically limited in this application.

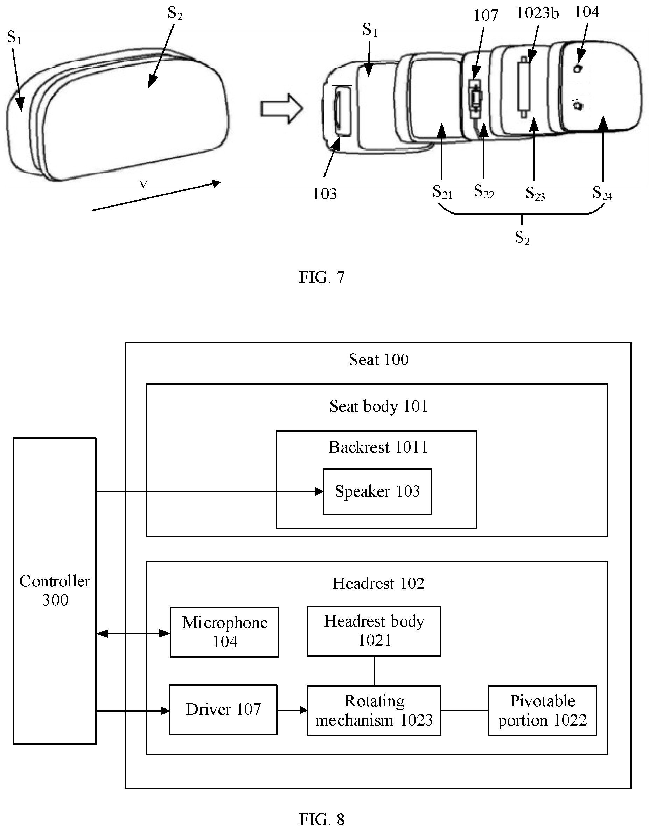

For example, the headrest 102 is suspended in front of the backrest 1011, and the driver 107 is disposed in the headrest body 1021. FIG. 7 is a diagram of an assembly structure of a headrest and a backrest according to this application. FIG. 7 shows only the headrest and an area that is on the backrest and that overlaps the headrest. A left side of FIG. 7 is a three-dimensional diagram of the assembly structure, and a right side of FIG. 7 shows a multi-piece structure obtained by slicing the three-dimensional assembly structure on the left side. As shown in FIG. 7, the assembly structure is sliced as a whole into a slice S₁ and a slice S₂. The slice S₁ is a slice corresponding to a backrest 1011 part, and may be considered as a slice obtained by cutting the backrest 1011 part from the assembly structure along a plane on which the backrest 1011 and a headrest 102 are attached. Two speakers 103 are disposed on the left and right sides of the slice S₁. One speaker 103 is closer to a left ear of a user, and the other speaker 103 is closer to a right ear of the user. In contrast to the slice S₁, the slice S₂ is a slice corresponding to the headrest 102 part. The entire slice S₂ is sliced into four sub-slices along a left-to-right direction (that is, a direction v shown in the figure), that is, a sub-slice S₂₁, a sub-slice S₂₂, a sub-slice S₂₃, and a sub-slice S₂₄. The sub-slice S₂₁ may be considered as a left half slice of the slice S₂, and an internal component of the left half slice is not shown. For details, refer to the sub-slice S₂₂ to the sub-slice S₂₄. The sub-slice S₂₂ may be considered as a headrest body 1021 part cut from the right half slice of the slice S₂, and a driver 107 is disposed in this part. The sub-slice S₂₃ may be considered as a rotating mechanism part cut from the right half slice of the slice S₂, and includes a second rotating mechanism 1023b. A rotating shaft is used as an example in the figure. The sub-slice S₂₄ may be considered as a pivotable portion part cut from the right half slice of the slice S₂, and a microphone 104 is disposed in this part.

Further, optionally, in addition to being disposed in the pivotable portion 1022, the microphone 104 may also be disposed in the headrest body 1021, and there may be one or more microphones 104 in the headrest body 1021 and the pivotable portion 1022 on any side. For example, in FIG. 6A and FIG. 6B, two groups of microphones (a microphone group 1 104a and a microphone group 2 104b) are used as an example. The microphone group 1 104a is closer to the right ear of the user, and the microphone group 2 104b is closer to the left ear of the user. Each group of microphones may include four microphones, where two microphones are disposed on upper and lower sides of an edge of the pivotable portion, and the other two microphones are disposed on upper and lower sides of an edge that is of the headrest body 1021 and that is close to the pivotable portion. In this way, regardless of a height of the user sitting in the seat body 101, a microphone closer to the ear of the user can always be found in each group of microphones. Noise collected by the microphone can be considered as noise heard by the ear of the user, and used to generate inverse phase noise, to improve noise cancellation effect at the ear of the user.

Further, optionally, when the pivotable portion 1022 pivots to a position close to the ear of the user, a distance between the microphone 104 and the ear of the user is less than a first distance. The distance between the microphone 104 and the ear of the user may be understood as a distance between a microphone closest to the ear of the user in the plurality of microphones and the ear of the user. For example, a microphone closest to the right ear of the user is usually a microphone on an upper side or a lower side of an edge of the first pivotable portion 1022a, and a microphone closest to the left ear of the user is usually a microphone on an upper side or a lower side of an edge of the second pivotable portion 1022b. The first distance may be understood as a distance at which there is a small difference between noise collected by the microphone and noise heard by the ear of the user. The distance may be determined by a person skilled in the art based on experience, or may be obtained based on an experimental test. For example, in an example, it is found through experimental testing that when the distance between the microphone 104 and the ear of the user is less than 5 cm, there is a small difference between the noise collected by the microphone 104 and the noise heard by the ear of the user. Therefore, the first distance may be set to 5 cm. In this design, both the microphone 104 and the ear of the user may be within a stable stage of a sound field of noise generated by a noise source outside the vehicle. The noise collected by the microphone 104 is similar to the noise heard by the ear of the user, thereby helping improve cancellation effect of the inverse phase noise on the noise heard by the ear of the user.

### 3. Controller

Optionally, the controller may be any device that can implement a control function, and may be disposed in the seat 100, or may be disposed outside the seat 100. The controller may be a controller specially configured to implement a noise cancellation function, or may be a controller that implements a noise cancellation function and also implements another function. For example, in a vehicle-mounted scenario, in an example, the controller may be a cockpit domain controller or a vehicle control unit (vehicle control unit, VCU). In this way, a controller originally existing in the vehicle may be used to implement the seat noise cancellation function, to improve utilization of components in the vehicle. Alternatively, in another example, to reduce workload of the cockpit domain controller or the VCU, a controller may be independently disposed to specially perform seat noise cancellation. The controller may be disposed in the seat body 101 or the headrest 102, or may be independent of the seat 100, and may be connected to the speaker 103 in the backrest 1011, the microphone 104 in the headrest 102, and the driver 107 through a cable.

For example, the controller is disposed outside the seat 100. FIG. 8 is a diagram of an architecture of a control circuit according to this application. The control circuit may belong to, for example, an in-vehicle audio system or an in-vehicle active noise cancellation system. The architecture includes a controller 300, a seat body 101, and a headrest 102. The seat body 101 includes a backrest 1011, and a speaker 103 is disposed in the backrest 1011. A microphone 104, a driver 107, a rotating mechanism 1023, a headrest body 1021, and a pivotable portion 1022 are disposed in the headrest 102. The controller 300 is separately connected to the driver 107, the microphone 104, and the speaker 103. The driver 107 is connected to the rotating mechanism 1023, and the rotating mechanism 1023 implements a rotatable connection between the headrest body 1021 and the pivotable portion 1022. When the control circuit operates, if the controller 300 determines to switch to a first mode, the controller 300 may control the driver 107 to drive the rotating mechanism 1023 to drive the pivotable portion 1022 to pivot in a direction close to an ear of a user, and may control the microphone 104 and the speaker 103 to be turned on, to start active noise cancellation in the first mode.

Further, optionally, when to switch to the first mode may be indicated by the user, or may be independently determined by the controller 300. For example, when the first mode is an immersive audio playing mode, the user may send an indication to the controller 300 before playing audio/video, so that the controller 300 controls, based on the indication, the microphone 104 and the speaker 103 to be turned on. Alternatively, when the controller 300 detects, in cooperation with a component like a camera, that the user is watching audio/video (for example, looking at a mobile phone screen for a long time in a landscape mode), the controller 300 may automatically control the microphone 104 and the speaker 103 to be turned on. For another example, when the first mode is a rest mode, the user may send an indication to the controller 300 before resting, so that the controller 300 controls, based on the indication, the microphone 104 and the speaker 103 to be turned on. Alternatively, when the controller 300 detects, in cooperation with a component like a camera, that the user lies in the seat for a long time, the controller 300 may automatically control the microphone 104 and the speaker 103 to be turned on. There are many ways for the user to send an indication to the controller, for example, a voice indication, a button indication, a display screen input indication, or a gesture indication. This is not specifically limited.

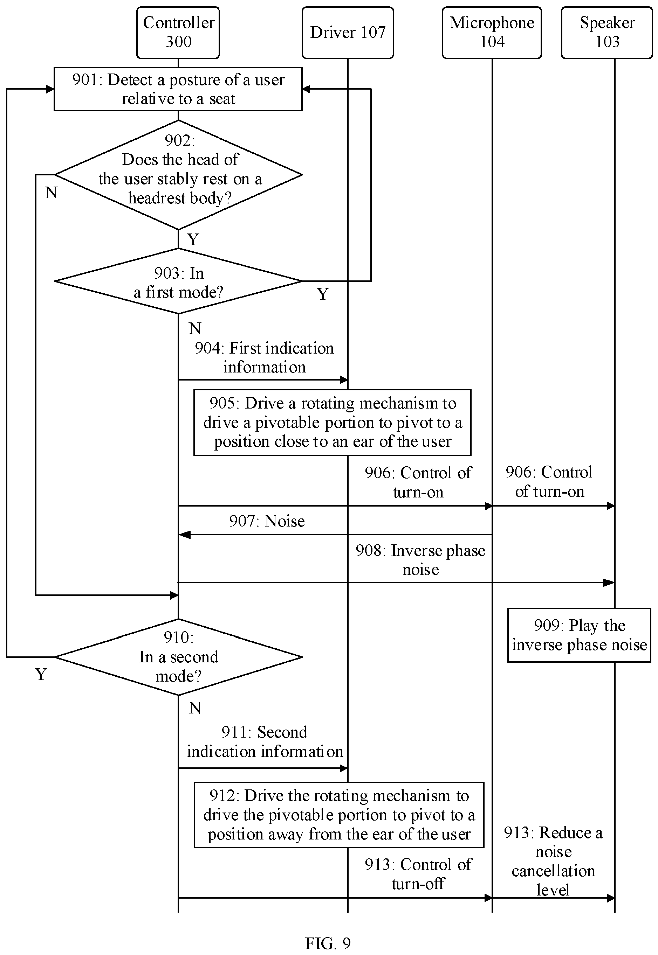

For example, the first mode is a rest mode, and the controller 300 independently determines when to switch to the rest mode. FIG. 9 is a schematic interaction flowchart of a control method according to this application. The method is applicable to the foregoing controller 300, driver 107, microphone 104, and speaker 103. With reference to FIG. 8, FIG. 9, FIG. 6A, FIG. 6B, FIG. 3A to FIG. 3C, and FIG. 5A to FIG. 5C, the method includes the following steps.

Step 901: The controller 300 detects a posture of a user relative to the seat 100.

Optionally, after the seat 100 is turned on or powered on, the seat 100 is in a non-rest mode (that is, a second mode) by default. In the non-rest mode, the microphone 104 does not operate, and the speaker 103 may operate or may not operate. For example, in a scenario in which the speaker 103 is used only for noise cancellation, the speaker 103 does not operate. In a scenario in which the speaker 103 is used to perform another function in addition to noise cancellation, the speaker 103 operates. The another function may be, for example, immersive sound playing, navigation playing, or real-time traffic reminder.

Further, optionally, after the seat 100 is turned on or powered on, if the controller 300 determines that a trigger condition is currently met, the controller 300 may start a periodic noise cancellation control policy. In each period, the controller detects a posture of a user sitting in the seat 100 relative to the seat 100. Duration of each period may be set by a person skilled in the art based on experience, for example, may be set to 5 minutes (minutes, min). A trigger condition may be configured based on a specific application scenario. For example, in an example, as wind noise outside a vehicle and tire friction noise generate large low-frequency noise in the vehicle only when a vehicle speed is high, the trigger condition may be configured as that the vehicle speed is higher than a preset vehicle speed. The preset vehicle speed may be, for example, 10 kilometers per hour (kilometers per hour, km/h). For another example, in another example, to ensure that the user can have good noise cancellation experience in the entire trip, the trigger condition may also be configured as that the seat 100 is turned on or powered on. In other words, the controller 300 starts to detect a posture of the user after determining that the seat 100 is turned on or powered on, and enables active noise cancellation as long as it is determined that the user is in a rest mode. For another example, in still another example, the trigger condition may also be configured as receiving a user indication. The controller 300 starts periodic detection only when a user indication for enabling a noise cancellation control strategy is received, and does not start detection when no user indication is received, to satisfy different requirements of different users for noise cancellation control. Other examples are not described herein.

Further, optionally, the posture of the user relative to the seat 100 may include that the user lies in the seat 100 and that the user does not lie in the seat 100. There are many manners for the controller 300 to detect the posture of the user relative to the seat 100. Examples are as follows.

### Posture detection manner 1

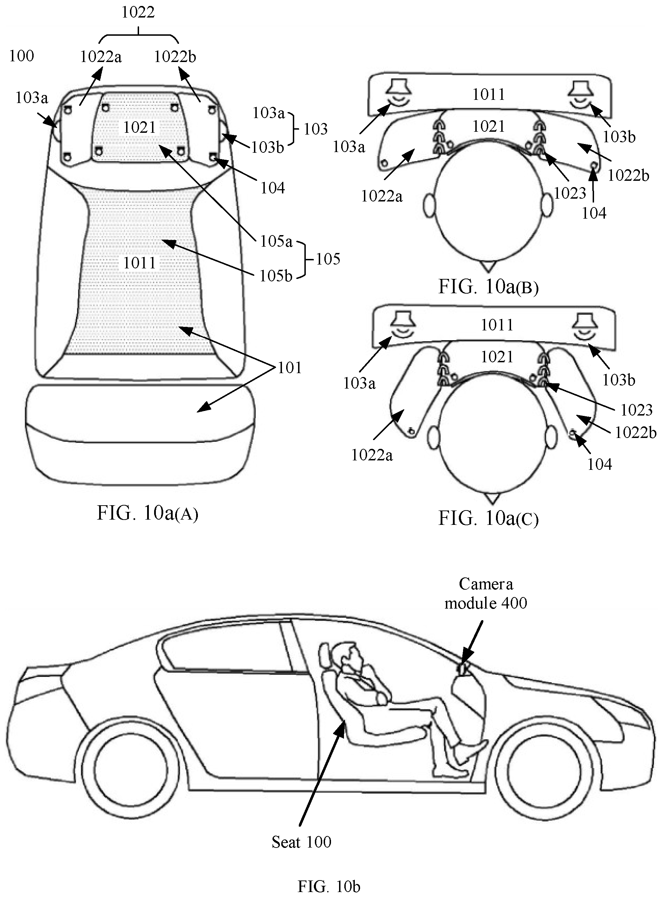

FIG. 10a(A) to FIG. 10a(C) are a diagram of a structure of another seat according to this application. The seat shown in FIG. 3A to FIG. 3C is used as an example. FIG. 10a(A) is a main view of the seat, FIG. 10a(B) is a diagram of a second mode of the seat, and FIG. 10a(C) is a diagram of a first mode of the seat. As shown in FIG. 10a(A) to FIG. 10a(C), in this example, in addition to the foregoing components, the seat 100 may further include a pressure detection unit 105. The pressure detection unit 105 may be disposed only in the headrest body 1021 (that is, a first pressure detection unit 105a), or may be disposed in both the headrest body 1021 and the backrest 1011 (that is, a second pressure detection unit 105b). The pressure detection unit 105 may be any device that can detect a pressure value. For example, in an example, the pressure detection unit 105 may be a pressure sensor. There may be a plurality of pressure sensors, and the plurality of pressure sensors are evenly distributed in a main force-bearing area of the headrest body 1021, or the backrest 1011, or both the headrest body 1021 and the backrest 1011. For another example, in another example, the pressure detection unit 105 may be a pressure sensing thin film, and the pressure sensing thin film is directly attached to a main force-bearing area of the headrest body 1021, or the backrest 1011, or both the headrest body 1021 and the backrest 1011, and may be used to detect pressure of a user on the pressure sensing thin film. For another example, in still another example, a soft material that can sense pressure may be directly used to make a seat skin. For example, a textile that can sense pressure is used to make the seat skin. The seat skin is wrapped on an exterior of the backrest 1011 and the headrest 102, to form an appearance surface of the seat 100, and may be directly used to detect pressure in an area in which the user is in contact with the seat skin.

Further, optionally, an example in which the first pressure detection unit 105a and the second pressure detection unit 105b are disposed on the headrest body 1021 and the backrest 1011 is used. Both the first pressure detection unit 105a and the second pressure detection unit 105b may be connected to a controller 300 (not shown in the figure). The first pressure detection unit 105a may detect, in real time, first pressure borne by the headrest body 1021 and send the first pressure to the controller 300. The second pressure detection unit 105b may detect, in real time, second pressure borne by the backrest 1011 and send the second pressure to the controller 300. The controller 300 may determine, based on the first pressure and the second pressure received at a same moment, that the user lies in the seat 100 at the current moment when determining that the first pressure is greater than a first pressure threshold and the second pressure is greater than a second pressure threshold. The first pressure threshold indicates a critical value of pressure of the head of the user on the headrest body 1021, and the second pressure threshold indicates a critical value of pressure of a back of the user on the backrest 1011. The first pressure threshold and the second pressure threshold may be obtained, for example, through experimental testing.

In the posture detection manner 1, the controller may determine, by analyzing the pressure of the head of the user on the headrest body, and optionally the pressure of the back of the user on the backrest, whether the user lies in the seat, and the pressure detection unit usually collects the pressure at a high frequency in real time. Therefore, in this detection manner, a posture of the user at each moment can be determined in time. In addition, determining whether the user lies in the seat based on the pressure of the head and the pressure of the back can further avoid misjudgment caused by analyzing only the pressure of the head, and help improve accuracy of detecting the posture of the user.

### Posture detection manner 2

Refer to FIG. 10b. FIG. 10b is a diagram of a device using a seat according to this application. The seat shown in FIG. 5A to FIG. 5C is used as an example of the seat. With reference to FIG. 10b, FIG. 6A, and FIG. 6B, in this example, a camera module 400 may be further disposed in front of the seat 100. The camera module 400 may be connected to the controller 300, and is configured to periodically (with period duration far less than period duration of a control strategy, for example, 5s (seconds)) capture an image of the user sitting in the seat 100, and send the image to the controller 300. The controller 300 detects the image received at each moment, and determines a distance between the head of the user in the image and the headrest body 1021 of the seat 100. When the distance is less than a distance threshold, it may be determined that the user rests on the headrest body 1021 at the current moment, and it may be further considered that the user lies in the seat 100. The distance threshold indicates a critical distance value at which the head of the user rests on the headrest body 1021. Ideally, the distance threshold is 0. However, in consideration of impact of errors, the distance threshold may also be set to a value close to 0, for example, 1 cm.

Optionally, the camera module 400 may be, for example, a depth camera. The depth camera may capture first depth information between the head of the user and the camera module 400 and second depth information between the headrest body 1021 and the camera module 400. The controller 300 may perform algorithmic identification on the first depth information and the second depth information to obtain a first distance between the head of the user and the camera module 400 and a second distance between the headrest body 1021 and the camera module 400, and may further use a difference between the second distance and the first distance as a distance between the head of the user and the headrest body 1021. Alternatively, in some scenarios, the controller 300 may obtain a preset correspondence between a plurality of positions and a plurality of second distances. The plurality of positions refer to any positions of the seat 100 in a front-to-back movement process. The second distance corresponding to the position refers to a distance between the headrest body 1021 and the camera module 400 when the seat 100 is at the position. The correspondence between the plurality of positions and the plurality of second distances may be obtained through measurement after the seat 100 and the camera module 400 are assembled, and may be stored in the controller 300 or another component in the device, for example, a memory.

It may be understood that the camera module 400 may alternatively be another type of camera, for example, a binocular camera. A distance from the binocular camera to the head of the user may be estimated by computing a parallax of images collected by the binocular camera. Alternatively, the camera module 400 may be a common camera. The common camera may be disposed above the seat, and the distance between the head of the user and the headrest body 1021 may be directly identified from an image of the user sitting in the seat 100 that is captured from above. In addition, in FIG. 10b, an example in which the camera module 400 is disposed in front of the seat 100 is used. However, the camera module 400 may alternatively be disposed at another position of the seat 100, for example, a left front position, a right front position, an upper front position, or a lower front position. This is not limited in this application.

In the posture detection manner 2, the controller may determine, by analyzing a distance between the head of the user and the headrest body, whether the head of the user rests on the headrest body, and further determine whether the user lies in the seat. Distance detection is more intuitive than pressure detection, and can make posture detection more accurate.

It should be noted that the foregoing merely provides two possible posture detection manners as examples. In an actual scenario, a user posture may alternatively be detected in another manner. For example, in another example, a deformation detection sensor may alternatively be mounted in the headrest body 1021 and the backrest 1011 of the seat 100, and a deformation amount of the headrest body 1021 and the backrest 1011 is collected to detect whether the user lies in the seat 100. Alternatively, in still another example, a radar may be disposed in front of one or more sides of the seat 100. The radar may be a lidar, an ultrasonic radar, or the like. The radar may detect a distance between the user and the radar, to determine whether the user lies in the seat 100. Other examples are not described herein.

Step 902: The controller 300 determines, based on the posture of the user relative to the seat 100, whether the head of the user stably rests on the headrest body 1021. If yes, step 903 is performed; or if no, step 910 is performed.

Optionally, after each period starts, the controller 300 may obtain a posture change of the user relative to the seat 100 within specified duration. If the user keeps lying in the seat 100 within the specified duration, it may be determined that the head of the user stably rests on the headrest body 1021; otherwise, it is determined that the head of the user does not stably rest on the headrest body 1021. The specified duration may be duration less than the period duration, for example, 1 min.

1 min is used as an example. When the posture of the user is detected in the posture detection manner 1, if the controller 300 determines that the pressure collected by the pressure detection unit 105 within 1 min remains greater than the pressure threshold, it indicates that the headrest body 1021 (and optionally the backrest 1011) keeps bearing relatively large pressure within the 1 min, and further indicates that the head of the user remains in close contact with the headrest body 1021 (and optionally the back of the user remains in close contact with the backrest 1011). In this case, the controller 300 may determine that the head of the user stably rests on the headrest body 1021. On the contrary, if it is determined that at least one pressure value collected by the pressure detection unit 105 within 1 min is not greater than the pressure threshold, it indicates that the head of the user may occasionally, frequently, or constantly leave the headrest body 1021 (and optionally it further indicates that the back of the user may occasionally, frequently, or constantly leave the backrest 1011). In this case, the controller 300 may determine that the head of the user does not stably rest on the headrest body 1021.

Similarly, when the posture of the user is detected in the posture detection manner 2, if the controller 300 determines that a distance between the head of the user and the headrest body 1021 remains not greater than a distance threshold within 1 min, it indicates that the head of the user keeps resting on the headrest body 1021 in the 1 min. In this case, the controller 300 may determine that the head of the user stably rests on the headrest body 1021. On the contrary, if it is determined that at least one distance between the head of the user and the headrest body 1021 within 1 min is greater than the distance threshold, it indicates that the head of the user may occasionally, frequently, or constantly leave the headrest body 1021. In this case, the controller 300 may determine that the head of the user does not stably rest on the headrest body 1021.

Step 903: The controller determines whether a current mode is a first mode. If no, step 904 is performed; or if yes, step 901 is performed.

It may be understood that, when the head of the user stably rests on the headrest body 1021, it indicates that the user may be resting, sleeping, or in another scenario in which the head needs to stably rest on the headrest, and it is required to switch to the rest mode (that is, the first mode). In this case, if the current mode is not the rest mode, the controller 300 may adjust the current mode to the rest mode. On the contrary, if the current mode is the rest mode, no adjustment is required, and the controller 300 may wait until the current period ends, and then start a noise cancellation control strategy of a next period.

Optionally, after determining to adjust the current mode to the rest mode, before performing a specific adjustment operation, the controller 300 may further first send first prompt information to the user, where the first prompt information prompts the user whether to enable the rest mode. The first prompt information may be sent in a plurality of manners. For example, the first prompt information may be sent in a voice manner, for example, a prompt tone may be directly sent through the speaker 103; or the first prompt information may be sent in a display manner, for example, a prompt box pops up on a display screen in front of or near the seat, where the display screen may be, for example, any screen that can display, like an in-vehicle infotainment display screen or a rear seat display screen; or the first prompt information may be sent in a manner combining voice with display, to ensure that the user can receive a prompt when the user fails to pay attention to either the voice or the display. When the prompt is sent in the voice manner, the user may indicate, by using voice, to enable or skip enabling the rest mode, and the indication information is collected by an in-vehicle voice module and sent to the controller 300. When the prompt is sent in the display manner, the user may select, in a prompt box that pops up on the screen, to enable or skip enabling the rest mode. The indication information is collected by an in-vehicle infotainment and sent to the controller 300. If the controller 300 receives an indication for enabling the rest mode, the controller 300 may perform the following steps 904 and 905 to make the microphone 104 closer to the ear of the user, and perform the following steps 906 to 909 to enable an active noise cancellation function. On the contrary, if the controller 300 receives an indication for skipping enabling the rest mode, the controller 300 may wait until the current period ends, and then start the noise cancellation control strategy of the next period.

Step 904: The controller sends first indication information to the driver 107.

Step 905: The driver 107 drives, based on the first indication information, a rotating mechanism 1023 to drive a pivotable portion 1022 to pivot to a position close to the ear of the user.

With reference to FIG. 6A, FIG. 6B, and FIG. 3A to FIG. 3C, or FIG. 6A, FIG. 6B, and FIG. 5A to FIG. 5C, in the non-rest mode, the first pivotable portion 1022a, the second pivotable portion 1022b, and the headrest body 1021 are shown in FIG. 3B or FIG. 5B. The driver 107 may control, based on the first indication information, the first rotating mechanism 1023a and the second rotating mechanism 1023b to drive the first pivotable portion 1022a and the second pivotable portion 1022b to pivot close to each other in the +X direction, so that the microphones 104 in the first pivotable portion 1022a and the second pivotable portion 1022b gradually approach the ears of the user, and finally stop at positions that are of the first pivotable portion 1022a and the second pivotable portion 1022b and that are close to the ears of the user, as shown in FIG. 3C or FIG. 5C. At these positions, the first pivotable portion 1022a, the second pivotable portion 1022b, and the headrest body 1021 form narrow space that can accommodate the head of the user, and a distance between the microphone 104 and the ear of the user is not greater than the first distance, where the first distance may be set to, for example, 5 cm. In addition, in a process in which the first pivotable portion 1022a and the second pivotable portion 1022b pivot, a distance between the speaker 103 and the ear of the user remains unchanged, and the distance is within a first specified range. The first specified range may be set to, for example, [10 cm, 30 cm].

Step 906: The controller controls the microphone 104 and the speaker 103 to be turned on.

It may be understood that, when the speaker 103 is also turned on in the non-rest mode, the controller 300 may turn on only the microphone 104.

Step 907: The controller obtains noise collected by the microphone 104.

Step 908: The controller generates inverse phase noise based on the noise collected by the microphone 104, and sends the inverse phase noise to the speaker 103.

Step 909: The speaker 103 plays the inverse phase noise.

Optionally, with reference to FIG. 6A, FIG. 6B, and FIG. 3A to FIG. 3C, or FIG. 6A, FIG. 6B, and FIG. 5A to FIG. 5C, in the rest mode, the controller 300 may control the microphone group 1 104a, the microphone group 2 104b, the first speaker 103a, and the second speaker 103b to operate. During operation, each microphone in the microphone group 1 104a and the microphone group 2 104b collects noise at a position where the microphone is located and sends the noise to the controller 300. The controller 300 may compute, by using an internal algorithm, first inverse phase noise and second inverse phase noise based on the noise collected by each microphone in the microphone group 1 104a and the microphone group 2 104b, send the first inverse phase noise to the first speaker 103a, and send the second inverse phase noise to the second speaker 103b. The first speaker 103a plays the first inverse phase noise in an operating state, and the second speaker 103b plays the second inverse phase noise in the operating state. After the first inverse phase noise played by the first speaker 103a and the second inverse phase noise played by the second speaker 103b are propagated to a right ear position of the user, the first inverse phase noise and the second inverse phase noise are superimposed to jointly perform noise cancellation on the right ear of the user. After the second inverse phase noise played by the second speaker 103b and the first inverse phase noise played by the first speaker 103a are propagated to a left ear position of the user, the second inverse phase noise and the first inverse phase noise are superimposed to jointly perform noise cancellation on the left ear of the user. Using the two speakers to perform noise cancellation on each ear of the user can effectively suppress noise heard by the ears on both sides, thereby improving noise cancellation effect on the ears of the user.

Further, optionally, the microphone group 1 104a is used as an example. The controller 300 may determine the first inverse phase noise in a plurality of manners. For example, in an example, the controller 300 may first detect, in cooperation with a component like a camera, a microphone that is in the microphone group 1 104a and that is closest to the right ear of the user, then flip a phase of noise collected by the microphone by 180 degrees, and use the noise as the first inverse phase noise. For another example, in another example, the controller 300 may alternatively first perform averaging or weighted averaging on noise collected by all microphones in the microphone group 1 104a, then flip a phase of averaged noise or weighted-averaged noise by 180 degrees, and use obtained noise as the first inverse phase noise. A weight corresponding to each microphone may be determined, for example, based on a distance between the microphone and the right ear of the user. Larger weight may be set for a shorter distance. For another example, in still another example, the controller 300 may further obtain intermediate noise of all noise collected by all microphones in the microphone group 1 104a, flip a phase of the intermediate noise by 180 degrees, and use obtained noise as the first inverse phase noise. Other examples are not described herein.

In the steps 904 to 909, when the head of the user stably rests on the headrest body, the rest mode is entered for the user, to actively perform noise cancellation for the user, to improve comfort of the user when the user is resting or sleeping. In addition, when the rest mode is entered, the pivotable portion 1022 drives the microphone 104 to rotate to a position closer to the ear of the user, so that a difference between a primary sound field at the microphone 104 and a primary sound field at the ear of the user is small. In addition, a distance between the ear of the user and the microphone 104 is similar to a distance between the ear of the user and the speaker 103. Therefore, a difference between a secondary sound field of the ear of the user and a secondary sound field of the microphone 104 is also small. In this way, noise collected by the microphone can be similar to noise heard by the ear of the user, and inverse phase noise corresponding to the noise can effectively cancel the noise heard by the ear of the user, thereby achieving better noise cancellation performance at the human ear, to obtain quieter riding experience. In addition, in a process in which the microphone 104 rotates, the distance between the speaker 103 and the ear of the user remains unchanged, and the distance is longer than the distance between the microphone 104 and the ear of the user. In this way, a large change of sound played by the speaker 103 and heard by the ear of the user is prevented despite a slight movement of the head of the user when the user is resting or sleeping, and stable noise cancellation experience can be provided for the ear of the user when the user is resting or sleeping.

Step 910: The controller determines whether a current mode is the second mode. If no, step 911 is performed; or if yes, step 901 is performed.

It may be understood that, when the head of the user does not stably rest on the headrest body 1021, it indicates that the user is not resting or sleeping, and the user may need large head movement space, and it is required to switch to the non-rest mode. In this case, if the current mode is not the non-rest mode, the controller 300 may adjust the current mode to the non-rest mode. On the contrary, if the current mode is the non-rest mode, no adjustment is required. The controller 300 may wait until the current period ends, and then start the noise cancellation control strategy of the next period.

Optionally, after determining to adjust the current mode to the non-rest mode, before performing a specific adjustment operation, the controller 300 may further first send second prompt information to the user, where the second prompt information prompts the user whether to disable the rest mode. The second prompt information may be sent in a plurality of manners. For example, the second prompt information may be sent in a voice manner, for example, a prompt tone may be directly sent through the speaker 103; or the second prompt information may be sent in a display manner, for example, a prompt box pops up on a display screen in front of or near the seat, where the display screen may be, for example, any screen that can display, like an in-vehicle infotainment display screen or a rear seat display screen; or the second prompt information may be sent in a manner combining voice with display, to ensure that the user can receive a prompt when the user fails to pay attention to either the voice or the display. When the prompt is sent in the voice manner, the user may indicate, by using voice, to disable or skip disabling the rest mode, and the indication information is collected by an in-vehicle voice module and sent to the controller 300. When the prompt is sent in the display manner, the user may select, in a prompt box that pops up on the screen, to disable or skip disabling the rest mode. The indication information is collected by an in-vehicle infotainment and sent to the controller 300. If the controller 300 receives an indication for disabling the rest mode, the controller 300 may perform the following steps 911 and 912 to make the pivotable portion 1022 away from the ear of the user, and perform the following step 913 to disable the active noise cancellation function or lower a noise cancellation level of the active noise cancellation function. On the contrary, if the controller 300 receives an indication for skipping disabling the rest mode, the controller 300 may wait until the current period ends, and then start the noise cancellation control strategy of the next period.

Step 911: The controller sends second indication information to the driver 107.

Step 912: The driver 107 drives, based on the second indication information, the rotating mechanism 1023 to drive the pivotable portion 1022 to pivot to a position away from the ear of the user.

With reference to FIG. 6A, FIG. 6B, and FIG. 3A to FIG. 3C, or FIG. 6A, FIG. 6B, and FIG. 5A to FIG. 5C, in the rest mode, the first pivotable portion 1022a, the second pivotable portion 1022b, and the headrest body 1021 are shown in FIG. 3C or FIG. 5C. The driver 107 may control, based on the second indication information, the first rotating mechanism 1023a and the second rotating mechanism 1023b to drive the first pivotable portion 1022a and the second pivotable portion 1022b to pivot away from each other in the -X direction, so that the first pivotable portion 1022a and the second pivotable portion 1022b gradually move away from the ears of the user, and finally stop at positions where the first pivotable portion 1022a and the second pivotable portion 1022b are unfolded. At these positions, the first pivotable portion 1022a, the second pivotable portion 1022b, and the headrest body 1021 are located on a same arc surface, as shown in FIG. 3B or FIG. 5B. Because the two pivotable portions are unfolded, the head of the user may have large movement space, so that the head of the user can move freely in a non-resting state.

Step 913: The controller 300 controls the microphone 104 to be turned off, or lowers a noise cancellation level at which the speaker 103 plays the inverse phase noise for noise cancellation.

Optionally, in the non-rest mode, if the speaker 103 is configured to implement other functions (for example, send the first prompt information as described in step 904, play immersive sound, play navigation, or play traffic reminder) in addition to perform active noise cancellation, the controller 300 may control only the microphone 104 to be turned off, and keep the speaker 103 on. On the contrary, if the speaker 103 is configured only to perform active noise cancellation, the controller 300 may control both the microphone 104 and the speaker 103 to be turned off, to disable the active noise cancellation function, or may control only the speaker 103 to lower a level of playing the inverse phase noise for noise cancellation, and neither the microphone 104 nor the speaker 103 is turned off. The level at which the speaker 103 plays the inverse phase noise for noise cancellation is related to an upper frequency limit of the inverse phase noise played by the speaker 103. A smaller upper frequency limit of the inverse phase noise indicates a longer wavelength of the inverse phase noise and a larger effective noise cancellation area, but indicates less environmental noise that can be canceled and a lower noise cancellation level. Therefore, during switching from the rest mode to the non-rest mode, the controller 300 may lower the upper frequency limit of the inverse phase noise played by the speaker 103. For example, an upper frequency limit is 1000 Hz in the rest mode, and the upper frequency limit may be lowered to 500 Hz in the non-rest mode. In this way, even if the distance between the ear of the user and the speaker 103 becomes longer due to movement of the head of the user in the non-rest mode, the ear of the user can still hear the inverse phase noise played by the speaker 103. In addition, because the upper frequency limit of the inverse phase noise is lowered, compared with the rest mode, in the non-rest mode, the inverse phase noise has no noise cancellation effect on noise, whose upper frequency limit is lowered, in frequency bands (that is, 500 Hz to 1000 Hz). Therefore, the noise cancellation level of the inverse phase noise is lowered.

Further, optionally, a plurality of noise cancellation modes may be further preconfigured. After sending the second prompt information in the step 911, if the controller 300 receives an indication from the user for disabling the rest mode, the controller 300 may further prompt the user to select a noise cancellation mode. The plurality of noise cancellation modes may include, for example, a deep noise cancellation mode, a moderate noise cancellation mode, a shallow noise cancellation mode, and a no noise cancellation mode. Noise cancellation levels corresponding to the four noise cancellation modes progressively decrease. For example, an upper frequency limit for the speaker 103 to play the inverse phase noise in the deep noise cancellation mode is 1000 Hz, an upper frequency limit for the speaker 103 to play the inverse phase noise in the moderate noise cancellation mode is 500 Hz, an upper frequency limit for the speaker 103 to play the inverse phase noise in the shallow noise cancellation mode is 200 Hz, and an upper frequency limit for the speaker 103 to play the inverse phase noise in the no noise cancellation mode is 0 Hz. In this way, after the controller 300 receives a noise cancellation mode selected by the user, if the user selects one of the deep noise cancellation mode, the moderate noise cancellation mode, and the shallow noise cancellation mode, the controller 300 may lower the upper frequency limit for the speaker 103 to play the inverse phase noise to the upper frequency limit corresponding to the selected noise cancellation mode, and neither the microphone 104 nor the speaker 103 is turned off. If the user selects the no noise cancellation mode, the microphone 104 may be controlled to be turned off, and the speaker 103 may be turned off or not turned off. Turning off the speaker 103 can conserve electric energy. When the speaker 103 is not turned off, the speaker 103 may be configured to implement another function, thereby improving utilization of the speaker 103.

Based on the described structure and function of the seat, this application may further provide a transportation means, including the foregoing seat and controller, for example, the seat 100 and the controller 300 shown in FIG. 8. In a traveling process of the transportation means, the controller is configured to control the seat to be in the first mode when it is detected that the head of the user stably rests on the headrest. Optionally, the controller may be further configured to: when it is detected that the head of the user does not stably rest on the headrest, control the seat to be in the second mode. For related content of the controller and the seat, refer to the related descriptions in FIG. 8 and FIG. 9. Details are not described herein again.

The transportation means may include, for example, but is not limited to: a car, a truck, a bus, a boat, an airplane, a helicopter, a recreational vehicle, a playground vehicle, a construction vehicle, a tram, a golf cart, a train, an unmanned vehicle, an intelligent vehicle, a digital vehicle, and the like.

In this application, "at least one" means one or more, and "a plurality of" means two or more. "At least one of the following items (pieces)" or a similar expression thereof indicates any combination of these items, including a single item (piece) or any combination of a plurality of items (pieces). For example, at least one of a, b, or c may indicate a, b, c, a and b, a and c, b and c, or a, b, and c, where a, b, and c may be singular or plural. In addition, in this application, the term "example" or "optional" represents an example, an illustration, or a description. Any embodiment or design solution described as an "example" or "optional" in this application shall not be construed as being more preferred or more advantageous than another embodiment or design solution. Alternatively, it may be understood as that the word "example" or "optional" is used to present a concept in a specific manner, and does not constitute a limitation on this application.

It may be understood that, in this application, various numeric numbers are distinguished merely for ease of description and are not used to limit the scope of embodiments of this application. Sequence numbers of the foregoing processes do not mean a sequence of execution. The sequence of execution of the processes should be determined according to functions and internal logic of the processes. The terms "first", "second", and the like are used to distinguish between similar objects without having to describe a specific order or sequence. In addition, the terms "include", "have", or any variant thereof are intended to cover non-exclusive inclusion, for example, include a series of steps or units. A method, system, product, or device is not necessarily limited to those steps or units expressly listed, but may include other steps or units not expressly listed or inherent to such a process, method, product, or device.

## Claims

1. A seat, comprising a seat body and a headrest, wherein the headrest is fastened to the seat body, a microphone is disposed in the headrest, the seat body comprises a backrest, and a speaker is disposed in the backrest; and
in a first mode, the microphone is configured to collect noise, and the speaker is configured to play inverse phase noise of the noise.

2. The seat according to claim 1, wherein in a second mode, the microphone does not operate, or the microphone operates while the speaker plays inverse phase noise for noise cancellation at a noise cancellation level lower than a noise cancellation level corresponding to the first mode.

3. The seat according to claim 1 or 2, wherein the first mode is a rest mode.

4. The seat according to any one of claims 1 to 3, wherein the headrest is suspended in front of the backrest, and the speaker is disposed in an area that is on the backrest and that overlaps the headrest.

5. The seat according to any one of claims 1 to 3, wherein the headrest is connected to an upper part of the backrest through a connecting rod, and the speaker is disposed in an area that is on the backrest and that is opposite to the headrest.

6. The seat according to any one of claims 1 to 5, wherein the headrest comprises a headrest body and a pivotable portion pivotably disposed on two sides of the headrest body, the headrest body is fastened to the backrest, and the microphone is disposed in the pivotable portion; and
in the first mode, the pivotable portion is at a position close to a human ear.

7. The seat according to claim 6, wherein in the second mode, the pivotable portion is at a position away from the human ear.

8. The seat according to claim 7, wherein the pivotable portion is connected to the headrest body through a rotating mechanism, a driver is disposed in the headrest body, and the driver is connected to the rotating mechanism; and
the driver is configured to: when it is determined to switch from the second mode to the first mode, drive the rotating mechanism to drive the pivotable portion to pivot to the position close to the human ear; and when it is determined to switch from the first mode to the second mode, drive the rotating mechanism to drive the pivotable portion to pivot to the position away from the human ear.

9. The seat according to claim 8, wherein the driver is connected to a controller;
the controller is configured to: when it is determined that the head of a user stably rests on the headrest body and a current mode is the second mode, send first indication information to the driver, and when it is determined that the head of the user does not stably rest on the headrest body and a current mode is the first mode, send second indication information to the driver; and
the driver is configured to: determine, based on the first indication information, to switch from the second mode to the first mode, and determine, based on the second indication information, to switch from the first mode to the second mode.

10. The seat according to claim 9, wherein a pressure detection unit is disposed in the headrest body, or a pressure detection unit is disposed in both the headrest body and the backrest, and the pressure detection unit is connected to the controller;
the pressure detection unit is configured to detect pressure on the headrest body or pressure on the headrest body and the backrest, and send the pressure to the controller; and
the controller is configured to: when it is determined that the pressure remains greater than a pressure threshold in specified duration, determine that the head of the user stably rests on the headrest body; and when it is determined that the pressure does not maintain greater than the pressure threshold in specified duration, determine that the head of the user does not stably rest on the headrest body.

11. The seat according to claim 9, wherein a camera module is disposed in front of the seat, and the camera module is connected to the controller;
the camera module is configured to: capture an image of the seat, and send the image to the controller; and
the controller is configured to: determine a distance between the head of the user and the headrest body of the seat based on the image, when the distance remains greater than a distance threshold in specified duration, determine that the head of the user stably rests on the headrest body, and when the distance does not remain greater than the distance threshold in specified duration, determine that the head of the user does not stably rest on the headrest body.

12. The seat according to any one of claims 9 to 11, wherein before sending the first indication information or the second indication information to the driver, the controller is further configured to:
send prompt information to the user, wherein the prompt information prompts the user whether to enable the first mode or the second mode.

13. The seat according to any one of claims 9 to 12, wherein after sending the first indication information to the driver, the controller is further configured to:
turn on the microphone and the speaker.

14. The seat according to any one of claims 9 to 13, wherein after sending the second indication information to the driver, the controller is further configured to:
turn off the microphone, or reduce a noise cancellation level at which the speaker plays the inverse phase noise for noise cancellation.

15. A transportation means, comprising a controller and the seat according to any one of claims 1 to 14, wherein
the controller is configured to: when it is detected that the head of a user stably rests on the headrest, control the seat to be in the first mode.
